(19)

**Europäisches Patentamt**
**European Patent Office**
**Office européen des brevets**

(11) **EP 3 822 820 A1**

(12) **EUROPEAN PATENT APPLICATION**

(43) Date of publication:
19.05.2021 Bulletin 2021/20

(51) Int Cl.:
**G06F 16/34** (2019.01)

(21) Application number: **21150908.8**

(22) Date of filing: **11.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.01.2020 CN 202010023642**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventors:
• **FENG, Xinwei**
  **Haidian District,, Beijing (CN)**

• **TIAN, Zhixing**
  **Haidian District,, Beijing (CN)**
• **DAI, Songtai**
  **Haidian District,, Beijing (CN)**
• **YU, Miao**
  **Haidian District,, Beijing (CN)**
• **ZHOU, Huanyu**
  **Haidian District,, Beijing (CN)**
• **TIAN, Meng**
  **Haidian District,, Beijing (CN)**
• **WU, Xueqian**
  **Haidian District,, Beijing (CN)**
• **SONG, Xunchao**
  **Haidian District,, Beijing (CN)**
• **YUAN, Pengcheng**
  **Haidian District,, Anhui (CN)**

(74) Representative: **Lam, Alvin**
**Maucher Jenkins**
**26 Caxton Street**
**London SW1H 0RJ (GB)**

(54) **METHOD, APPARATUS, DEVICE, AND COMPUTER READABLE STORAGE MEDIUM FOR DETERMINING TARGET CONTENT**

(57) The present application discloses a method, an apparatus, a device, and a computer readable storage medium for determining a target content, the method includes: splitting an article paragraph determined according to search information into multiple sentences, and determining a relationship between the sentences according to attributes of the sentences; determining a sentence representation corresponding to each of the sentences according to the relationship between the sentences; and determining a target sentence according to the sentence representation of the sentence and the search information, and determining a target content according to the target sentence. In the method, the apparatus, the device, and the computer readable storage medium for determining a target content provided by the present disclosure, a relationship between sentences can be determined, sentence representations of the sentences can be re-determined according to the relationship between sentences, and then a target sentence is determined from the sentences according to the sentence representation, so that the method, the apparatus, the device, and the computer readable storage medium provided by the present disclosure can analyze each of the sentences in combination with the relationship between the sentences, thereby determining a target content that more closely matches the search information.

EP 3 822 820 A1

Splitting an article paragraph determined according to search information into multiple sentences, and determining a relationship between the sentences according to attributes of the sentences ⟋~ 201

Determining a sentence representation corresponding to each of the sentences according to the relationship between the sentences ⟋~ 202

Determining a target sentence according to the sentence representations of the sentences and the search information, and determining a target content according to the target sentence ⟋~ 203

FIG. 2

**Description**

**TECHNICAL FIELD**

The present disclosure relates to data processing technologies and, in particular, to text content analysis technologies.

**BACKGROUND**

Information retrieval is the main scheme for a user to query and obtain information, as well as a method and means to find information. At the same time, information retrieval is also a core task of search engines, and the search engines need to provide information according to a content entered by users.

With the acceleration of the pace of life in modern society, people are facing more and more information, and the time to read information is getting shorter and shorter. In general, there will be a lot of content in an article; for example, a user wants to know who the starring of a certain movie is; but a large amount of space of the article may be used to introduce the movie itself, and then the performance lineup. There may also be a large number of introductions of the actors themselves in the paragraphs of the performance lineup, and only a few sentences can really answer the questions. Some questions can be answered in one sentence, while some answers require a combination of the contents of multiple sentences.

Therefore, how to determine useful information in an article so as to feed back the useful information to a user is a technical problem to be solved urgently by the person skilled in the art.

**SUMMARY**

The present disclosure provide a method, an apparatus, a device and a computer readable storage medium for determining a target content, so that useful information may be determined from an article.

In a first aspect, the present disclosure provides a method for determining a target content, including:

splitting an article paragraph determined according to search information into multiple sentences, and determining a relationship between the sentences according to attributes of the sentences;
determining a sentence representation corresponding to each of the sentences according to the relationship between the sentences; and
determining a target sentence according to the sentence representations of the sentences and the search information, and determining a target content according to the target sentence.

Optionally, the determining a relationship between the sentences according to attributes of the sentences includes:

obtaining an entity included in a sentence; and
determining a first relationship between the sentences according to a corresponding degree of overlap of entities between the sentences.

The method provided in this embodiment can determine a relationship between the sentences from a dimension of the entity included in the sentences.

Optionally, the determining a relationship between the sentences according to attributes of the sentences includes:
determining position labels of the sentences in the article paragraph, and determining a second relationship between the sentences according to the position labels.

The method provided in this embodiment can determine a relationship between sentences from a dimension of the position of the sentences in a paragraph.

Optionally, the determining a relationship between the sentences according to attributes of the sentences includes:
determining a sentence vector corresponding to each of the sentences, and determining a third relationship between the sentences according to the sentence vector.

The method provided in this embodiment can determine a relationship between sentences from a dimension of a sentence semantic.

Optionally, the determining a relationship between the sentences according to attributes of the sentences includes:

determining an influence weight between the sentences according to a preset rule, and determining an attention of other sentences to a sentence according to the influence weight corresponding to the sentence.

The method provided in this embodiment can determine a relationship between sentences from a dimension of an influence between the sentences.

Optionally, the determining a sentence representation corresponding to each of the sentences according to the relationship between the sentences includes:

determining a relationship graph corresponding to the relationship according to the relationship between the sentences; and

determining a sentence representation of each of the sentences in the relationship graph through a preset neural network.

The method provided in this embodiment can determine a sentence representation including a relationship between sentences.

Optionally, if the number of the relationship graph is greater than 1;

after the determining a sentence representation of each of the sentences in the relationship graph through a preset neural network, the method further includes:

splicing the sentence representations corresponding to the sentences to obtain a complete representation corresponding to the sentences.

The method provided in this embodiment can determine a sentence representations of the sentence relationships determined from multiple dimensions, so that the sentence representation includes more relationships between sentences.

Optionally, the determining a target sentence according to the sentence representations of the sentences and the search information, includes:

determining a matching degree according to the sentence representations and the search information; and

determining a preset number of sentence with highest matching degree as the target sentences.

The method provided in this embodiment can determine a target sentence matching search information in a paragraph by combining a relationship between sentences.

In a second aspect, the present disclosure provides an apparatus for determining a target content, including:

a splitting module, configured to split an article paragraph determined according to search information into multiple sentences, and determine a relationship between the sentences according to attributes of the sentences;

a representation determining module, configured to determine a sentence representation corresponding to each of the sentences according to the relationship between the sentences; and

a target determining module, configured to determine a target sentence according to the sentence representations of the sentences and the search information, and determine a target content according to the target sentence.

In a third aspect, the present disclosure provides an electronic device, including:

at least one processor; and

a memory communicatively connected to the at least one processor; where

the memory is stored with instructions executable by the at least one processor, and the instructions are executed by the at least one processor to enable the at least one processor to execute any one of the method for determining a target content as described above.

In a fourth aspect, the present disclosure provides a non-transitory computer readable storage medium stored with computer instructions, where the computer instructions are configured to enable the computer to execute any one of the method for determining a target content as described above.

In a fifth aspect, the present disclosure provides a computer program product including a computer program, the computer program is stored in a readable storage medium, at least one processor of an electronic device can read the computer program from the readable storage medium, and the at least one processor executes the computer program to enable the electronic device to execute any one of the method for determining a target content as described above.

The method, the apparatus, the device, and the computer readable storage medium for determining a target content provided by the present disclosure, the method includes: splitting an article paragraph determined according to search information into multiple sentences, and determining a relationship between the sentences according to attributes of the sentences; determining a sentence representation corresponding to each of the sentences according to the relationship between the sentences; and determining a target sentence according to the sentence representation of the sentence and the search information, and determining a target content according to the target sentence. In the method, the apparatus, the device, and the computer readable storage medium for determining a target content provided by the present disclosure, a relationship between sentences can be determined, sentence representations of the sentences can be re-determined according to the relationship between sentences, and then a target sentence is determined from the sentences according to the sentence representations, so that the method, the apparatus, the device, and the computer readable storage medium provided by the present disclosure can analyze each of the sentences in combination with the relationship between the sentences, thereby determining a target content that more closely matches the search information.

## BRIEF DESCRIPTION OF DRAWINGS

The drawings are used for better understanding of the present scheme and do not constitute a limitation of the present application.

FIG. 1A is a structure diagram of a system according to an exemplary embodiment of the present application;
FIG. 1B is an interface diagram according to an exemplary embodiment of the present application;
FIG. 2 is a flowchart of a method for determining a target content according to an exemplary embodiment of the present application;
FIG. 3 is a flowchart of a method for determining a target content according to another exemplary embodiment of the present application;
FIG. 4 is a structural diagram of an apparatus for determining a target content according to an exemplary embodiment of the present application;
FIG. 5 is a structural diagram of an apparatus for determining a target content according to another exemplary embodiment of the present application; and
FIG. 6 is a block diagram of an electronic device for implementing an exemplary embodiment of the present application.

## DESCRIPTION OF EMBODIMENTS

The following describes exemplary embodiments of the present application with reference to the accompanying drawings, which includes various details of the embodiments of the present application to facilitate understanding, and the described embodiments are merely exemplary. Therefore, persons of ordinary skill in the art should know that various changes and modifications can be made to the embodiments described herein without departing from the scope and spirit of the embodiments of the present application. Also, for clarity and conciseness, descriptions of well-known functions and structures are omitted in the following description.

Currently, a user may enter search information in a search engine, and the search engine may feedback a search content corresponding to the search information. Generally, there are a lot of contents retrieved on the network, and the user needs to read a lot of contents to get the needed content.

For example, the search information entered by a user is "Who is the mvp of the NBA 2018-2019 season", it is need to combine the following three sentences in one paragraph to answer jointly:

NBA 2018-2019 season individual award results announced;
Harden performed well this season, leading the team to the league first;
based on his excellent performance, he won the MVP of the season.

None of the above three sentences can answer the question independently. Therefore, it is necessary to analyze sentences in the paragraph to obtain useful information.

The solution provided by embodiments of this application analyzes the contents of sentences according to a relationship between the sentences in a paragraph, that is, combines the content of a sentence itself and other sentences to jointly determine the content that matches the search information.

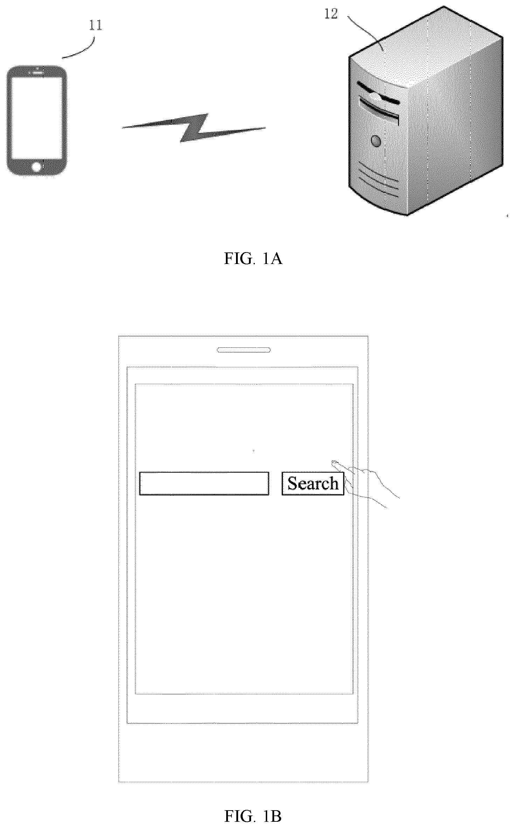

FIG. 1A is a structure diagram of a system according to an exemplary embodiment of the present application.

As shown in FIG. 1A, the system may include a user terminal 11, which may be a computer or an electronic device such as a smart phone and so on. The system may also include a server 12. The server 12 and the user terminal 11 can be connected via a network.

Among them, a user may input the search information in the user terminal 11, the user terminal 11 sends the search information to the server 12 through the network, and the server 12 may determine a search result according to the search information and feedback the search result to the user terminal 11.

Specifically, the server 12 may also determine a target content matching the search information according to the search result, and feedback the target content to the user terminal 11, so that the user can obtain useful information without reading a large amount of contents.

FIG. 1B is an interface diagram according to an exemplary embodiment of the present application.

As shown in FIG. 1B, an input box may be displayed on the interface of the user terminal 11. A user may enter search information in the input box and click a search button to trigger the user terminal 11 to send the search information to the server 12.

For example, a search engine set in the user terminal 11 may be started, so that the user terminal 11 displays an input box as shown in FIG. IB.

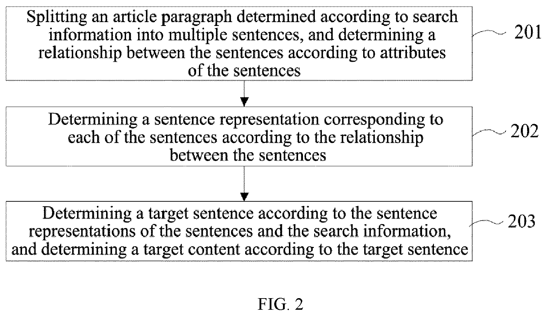

FIG. 2 is a flowchart of a method for determining a target content according to an exemplary embodiment of the present application.

As shown in FIG. 2, the method for determining a target content provided in this embodiment includes:
Step 201, splitting an article paragraph determined according to search information into multiple sentences, and determining a relationship between the sentences according to attributes of the sentences.

Among them, the method provided in this embodiment may be executed by an electronic device with computing capability, and the device may be, for example, a server as shown in FIG. 1A.

Specifically, the electronic device may determine a corresponding search result according to search information, such as a news report or an article. The electronic device may analyze the search result based on the method provided in this embodiment, and obtain a target content corresponding to the search information, that is, useful information.

Furthermore, the method provided in this embodiment may be encapsulated in software, and then the software is installed in an electronic device, so that the electronic device can execute the method provided in this embodiment.

In practical application, for a paragraph in a search result, the paragraph may be split to obtain multiple sentences. For example, if an article in the search result includes one paragraph, then the one paragraph may be processed. If an article in the search result includes more than one paragraph, then the each paragraph may be processed.

Among them, an article paragraph may be split according to punctuation marks in the paragraph. It can be regarded as a sentence between the beginning of the paragraph and a first punctuation mark, and a sentence between every two punctuation marks in the paragraph.

Specifically, a relationship between the sentences may also be determined according to a sentence attribute. In the method provided in this embodiment, the article paragraph is analyzed in combination with the relationship between the sentences, so as to more accurately identify the information contained in each sentence in combination with the relationship between the sentences.

Furthermore, the sentence attribute may be information such as a content included in the sentence, the position of the sentence in the paragraph and so on. The relationship between the sentences can be determined according to this information.

In practical application, for example, a relationship between the sentences can be determined according to an entity word included in the sentence. If a degree of overlap of the entity words included in two sentences is relatively high, it can be considered that the relevance between the two sentences is relatively strong, and the relevance can be regarded as a relationship between the sentences. For another example, if the positions of two sentences are relatively close, such as two consecutive sentences, it can be considered that the coherence between the two sentences is relatively strong. For an article paragraph, the coherence between the close sentences will be relatively strong. Therefore, the relationship between sentences can be determined according to the position of the sentences.

Step 202, determining a sentence representation corresponding to each of the sentences according to the relationship between the sentences.

Among them, the method provided in this embodiment may also re-determine a representation of each of the sentences. In an original article, a representation of a sentence can be considered as the content of the sentence. For example, the content of a sentence is "based on his excellent performance, he won the MVP of the season", then the content of this sentence is the sentence representation of this sentence, and the feedback content for the search information cannot be obtained only according to this sentence. Therefore, the method provided in this embodiment combines a relationship between sentences to re-determine the sentence representation so that a new sentence representation includes the relationship between the sentences.

Specifically, a relationship graph may be constructed according to the relationship between sentences, and a corresponding relationship graph may be determined for each kind of sentence relationship. For example, if a total of 4 kinds of sentence relationships are determined, 4 relationship graphs can be constructed, and the relationship graphs include the relationship between each of the sentences.

Multiple nodes may be included in the relationship graph, and each of the nodes may represent a sentence. The relationship between sentences can be represented by, for example, an edge, and the edge may also have a relationship value to indicate the relationship between the two nodes connected by the edge.

Furthermore, GCN (graph convolutional networks) may be used to process the relationship graph. For example, a relationship graph can be input to the GCN, and the GCN outputs a representation of each node in the graph, that is, the sentence representation.

In practical application, if multiple relationship graphs are determined according to the relationships between the sentences, the sentence representation of each of the sentences can be output according to each of the relationship graphs. In this case, the sentence representations of one sentence can also be spliced to obtain a complete representation of the sentence.

Among them, the obtained sentence representation includes the relationship between the sentences, so that a target content can be determined according to the sentence representation with the relationship between the sentences in the sentences.

Step 203, determining a target sentence according to the sentence representations of the sentences and the search information, and determining a target content according to the target sentence.

Specifically, a matching degree of the sentence representation of each of the sentences and the search information may be determined. If the matching degree is relatively high, the corresponding sentence can be considered as the target sentence.

Furthermore, the sentence representations may be converted into a vector form, and the search information may also be expressed as a vector form, so that the distance between the two vectors can be calculated, and the matching degree of the two can be determined according to the distance.

In practical application, the first n sentences with the highest matching degree may be determined as the target sentence. It is also possible to determine a matching degree threshold, and sentences whose matching degree is greater than the threshold may be determined as the target sentence.

Among them, the content included in the target sentence can be used as the target content, and the target content may also be feedback to a user terminal, so that a user can obtain useful information corresponding to the search information without reading a large amount of contents.

The method provided in this embodiment is used to determine a target content. The method is executed by a device configured with the method provided in this embodiment, and the device is usually implemented in hardware and/or software.

The method for determining a target content provided in this embodiment includes: splitting an article paragraph determined according to search information into multiple sentences, and determining a relationship between the sentences according to attributes of the sentences; determining a sentence representation corresponding to each of the sentences according to the relationship between the sentences; and determining a target sentence according to the sentence representations of the sentences and the search information, and determining a target content according to the target sentence. In the method provided in this embodiment, a relationship between sentences can be determined, sentence representations of the sentences can be re-determined according to the relationship between the sentences, and then a target sentence is determined from the sentences according to the sentence representation, so that the method provided in this embodiment can analyze each of the sentences in combination with the relationship between the sentences, thereby determining a target content that more closely matches the search information.

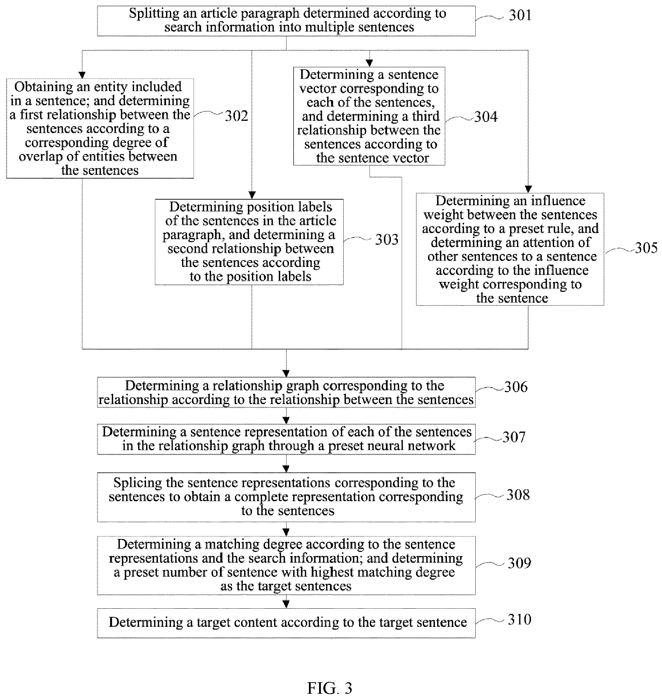

FIG. 3 is a flowchart of a method for determining a target content according to another exemplary embodiment of the present application

As shown in FIG. 3, the method for determining a target content provided in this embodiment includes:
Step 301, splitting an article paragraph determined according to search information into multiple sentences.

The specific principles and implementation manners of splitting a paragraph in step 301 are similar as that of step 201, which will not be repeated here.

Step 302, obtaining an entity included in a sentence; and determining a first relationship between the sentences according to a corresponding degree of overlap of entities between the sentences.

In one case, an attribute of a sentence may be an entity included in the sentence. Each of the sentences may be processed to obtain the entity included in each of the sentences.

Among them, an entity vocabulary may be set. The sentences may be split to obtain words included in the multiple sentences. Then the sentence words are recognized according to the entity words included in the entity vocabulary to determine the entities in the sentence words. For example, a sentence word may be queried in the entity vocabulary. If the corresponding word is found, it means that the sentence word is an entity.

Specifically, a recognition algorithm may also be set to recognize entities included in the sentences.

Furthermore, the first relationship between sentences may be determined according to the degree of overlap of corresponding entities between the sentences. Specifically, a relationship between every two sentences can be determined.

In practical application, if the degree of overlap of entities included in the two sentences is relatively high, it can be considered that the relevance between the two sentences is relatively strong. Therefore, the degree of overlap between the sentences can be used as an indicator of the first relationship.

Among them, a number of entities overlapping between the sentences $d_1$ can be determined, that is, $d_1$ is the

number of entities repeated in the two sentences. Then, the ratio of $d_1$ to the number of the entities included in a sentence, $d_2$, is used as the degree of overlap between the sentences. For example, when determining the degree of overlap between the sentences S1 and S2, two degrees of overlap can be obtained, where a first degree of overlap is the ratio of the number of overlapping entities, $d_1$, to the number of entities included in the sentence S1, $d_2$, a second degree of overlap is the ratio of the number of overlapping entities, $d_1$, to the number of entities included in the sentence S2, $d_2$, and the larger degree of overlap can be used as the degree of overlap between the two sentences.

Step 303, determining position labels of the sentences in the article paragraph, and determining a second relationship between the sentences according to the position labels.

In one case, an attribute of the sentence may be a position label. The position label of the sentence may be determined according to the position of the sentence in the article paragraph. For example, a label of a first sentence may be 1, a label of a second sentence may be 2, and so on.

Specifically, sentences in a paragraph serve as connecting links between the preceding and the following. Therefore, the closer the sentences are, the stronger the relevance between them. For example, the relevance between two consecutive sentences is relatively strong. In the method provided in this embodiment, a position attribute of the sentence may be represented by the position label, and the second relationship may be determined according to the position label of each of the sentences.

Furthermore, the second relationships between every two sentences may be determined.

In practical application, the reciprocal of the absolute value of the difference between the labels of corresponding sentences may be used to indicate the second relationship. For example, a second relationship between a first sentence S1 and a second sentence S2 is $1/|1-2|=1$; a relationship between a second sentence S2 and a fourth sentence S4 is: $1/|2-4|=0.5$.

Step 304, determining a sentence vector corresponding to each of the sentences, and determining a third relationship between the sentences according to the sentence vector.

In one case, a sentence attribute may be the sentence vector.

Among them, the sentence vector may be determined according to the words included in the sentence. A model may also be preset to determine the sentence vector.

For example, Doc2vec and BERT may be used to determine the sentence vector.

Specifically, the sentence vector may reflect the content included in the sentence, such as included words, order of the words, etc. Therefore, a relation of semantic between the sentences can be determined according to the sentence vectors, that is, the third relationship.

Furthermore, the third relationship between two sentences may be determined. Specifically, the cosine value of the sentence vectors corresponding to the two sentences can be calculated as the third relationship. For example, for sentences S1 and S2, a vector H1 corresponding to S1 and a vector H2 corresponding to S1 can be determined, and the cosine value of these two vectors can be calculated to indicate the strength of the relationship between sentences S1 and S2 in semantic.

Step 305, determining an influence weight between the sentences according to a preset rule, and determining an attention of other sentences to a sentence according to the influence weight corresponding to the sentence.

In practical application, a sentence attribute may also include an influence of other sentences to the sentence. Among them, a rule may be preset to determine an influence weight of one sentence to another sentence. For example, determine an influence of sentence S1 to sentence S2.

Among them, a coherence between sentences may be determined to indicate the influence of one sentence to another sentence. For example, $similarity(S_m, S_n)$ may be determined, which is used to indicate the influence weight of $S_n$ to $S_m$.

Specifically, the coherence may be indicated by the cosine value between sentences, such as $similarity(S_m, S_n) = cos(S_m, S_n)$. The corresponding sentence representation may be used to determine the cosine value.

Furthermore, an influence weight of each sentence to one sentence may be determined in this way, for example, influence weights of sentences S2, S3, S4 to S1 may be determined respectively. An attention of other sentences to one sentence may also be determined according to a corresponding influence weight of the sentence. That is, an attention of other sentences to one sentence may be determined according to an influence of other sentences to the sentence.

For a clearer explanation, the influenced sentence may be determined as a target sentence, and other sentences may be determined as the influencing sentence. The sum of the product of values of influence weight of the determined target sentence and the corresponding influencing sentences may be used as the attention of the target sentence, that is, the attention value of the influence of the influencing sentences to the target sentence.

For example, there are four sentences including S1, S2, S3, and S4, an attention of S1 is:

$$similarity(S1, S2) * S2 + similarity(S1, S3) * S3 + similarity(S1, S4) * S4$$

In practical application, when calculating the sentences, calculation may be performed according to the sentence representations. For example, for similarity (SI, S4), calculation may be performed according to the sentence representation of sentence S1 and the sentence representation of sentence S4. The sentence representation, for example, may be a sentence vector.

Among them, the attention of the sentence may be determined by a model. The model can be trained. In each iteration process, as the model is updated, determined attention results will also change, so that a final output result will change.

Steps 302-305 are four schemes for determining a relationship between sentences. These four schemes may be set at the same time, or any one or more of them may be set, which is not limited in this embodiment. Meanwhile, there is no restriction on the execution timing of steps 302-305.

Step 306, determining a relationship graph corresponding to the relationship according to the relationship between the sentences.

Specifically, after determining the relationship between sentences, the corresponding relationship graph may be determined according to the relationship between sentences.

Furthermore, if the relationships between multiple kinds of sentences are determined, a relationship graph corresponding to each kind of relationship may be determined. Multiple nodes can be included in the graph, and each of the nodes represents a sentence. There may be edges between the nodes, and the values of the edges may be the relationships between the nodes. For example, for the relationship graph corresponding to the first relationship, the edges between each of the nodes may be a degree of overlap between the sentences.

Step 307, determining a sentence representation of each of the sentences in the relationship graph through a preset neural network.

In practical application, the preset neural network can be trained in advance to extract information of each of the nodes in the relationship graph. For example, a Graph Convolutional Network may be set.

Among them, Graph Convolutional Network (GCN) is a method for deep learning of graph data. Input graph data into the GCN, and the GCN can extract node information according to the relationship between nodes in the graph, that is, a sentence representation of each of the sentence.

Specifically, the sentence representation output by the GCN includes information about the relationship between the sentences.

Step 308, splicing the sentence representations corresponding to the sentences to obtain a complete representation corresponding to the sentences.

Furthermore, if the number of determined relationship graphs is greater than 1, then for each of the sentences, more than one sentence representation may be obtained. For example, a first relationship graph, a second relationship graph, a third relationship graph, and an attention graph may be determined respectively according to the first relationship, the second relationship, the third relationship, and the attention. For the same sentence, a first representation, a second representation, a third representation, and an attention representation may be determined respectively according to these relationship graphs.

In practical applications, different relationship graphs describe relationships between the sentences from different dimensions. Therefore, the sentence representations obtained according to different relationship graphs may be spliced to obtain a complete sentence representation, thereby obtaining a sentence representation including more relationships between the sentences.

Among them, when the sentence representations of each of the sentences are spliced, splicing may be performed in the same order. For example, for each of the sentences, splicing is performed in the order of a first representation, a second representation, a third representation, and an attention representation.

Step 309, determining a matching degree according to the sentence representations and the search information; and determining a preset number of sentence with highest matching degree as the target sentences.

Specifically, if only one relationship graph is determined, this step may be performed directly according to the sentence corresponding to the relationship graph. If multiple relationship graphs are determined, this step may be performed according to the complete sentence representation.

Furthermore, a distance between the sentence representation of a sentence and the search information may be calculated, and the distance may be determined as a matching degree of the sentence. For example, the cosine value of a sentence representation H and the search information Q may be calculated, and the cosine value may be used as the distance between the two.

In practical application, when determining the cosine value, the sentence representation may be converted into a vector form, and the search information may also be converted into a vector form, so as to determine the cosine value of the two vectors, that is, the matching degree between the sentence and the search information can be obtained.

Among them, the sentences with a relatively higher matching degree may be determined as the target sentence. For example, the number value N may be preset, and the N sentences with the highest matching degree are selected as the target sentence. For another example, a scale value M may also be set, and the product of the number of sentences and the scale value may be determined as the number value N.

Specifically, if a retrieved article includes multiple article paragraphs, the sentence representations of the sentences in each of the paragraphs may be processed to determine the target sentences with a relatively higher matching degree.

Step 310, determining a target content according to the target sentence.

The specific principles and implementation manners of determining a target content in step 310 are similar with that of step 203, which will not be repeated here.

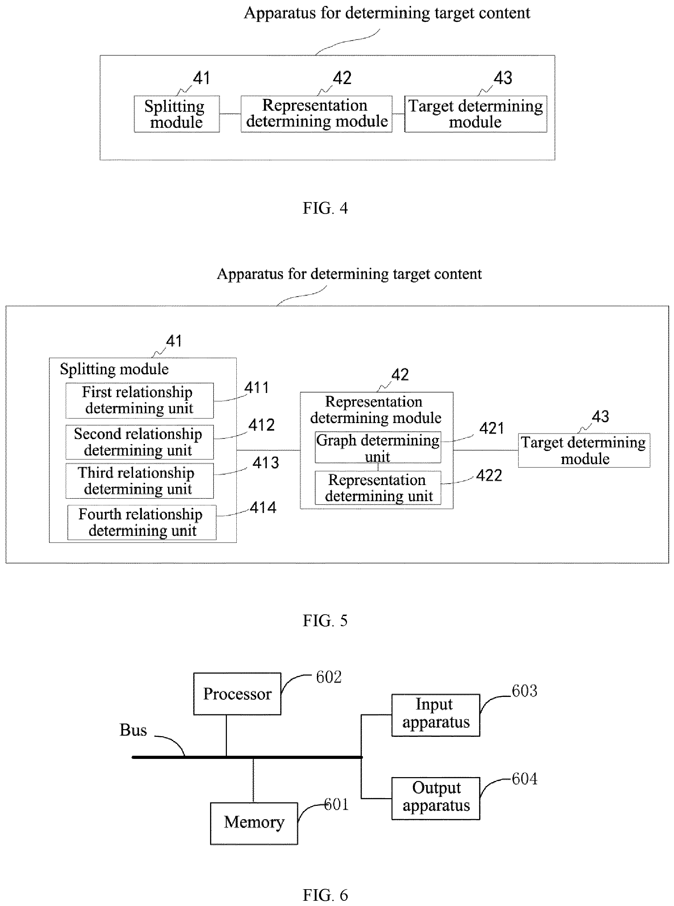

FIG. 4 is a structural diagram of an apparatus for determining a target content according to an exemplary embodiment of the present application

As shown in FIG. 4, the apparatus for determining a target content provided in this embodiment includes:

a splitting module 41, configured to split an article paragraph determined according to search information into multiple sentences, and determine a relationship between the sentences according to attributes of the sentences;
a representation determining module 42, configured to determine a sentence representation corresponding to each of the sentences according to the relationship between the sentences; and
a target determining module 43, configured to determine a target sentence according to the sentence representations of the sentences and the search information, and determine a target content according to the target sentence.

The apparatus for determining a target content provided in this embodiment includes: a splitting module 41, which is configured to split an article paragraph determined according to search information into multiple sentences, and determine a relationship between the sentences according to attributes of the sentences; a representation determining module 42, which is configured to determine a sentence representation corresponding to each of the sentences according to the relationship between the sentences; and a target determining module 43, which is configured to determine a target sentence according to the sentence representations of the sentences and the search information, and determining a target content according to the target sentence. In the apparatus provided in this embodiment, a relationship between sentences can be determined, sentence representations of the sentences can be re-determined according to the relationship between sentences, and then a target sentence is determined from the sentences according to the sentence representations, so that the apparatus provided in this embodiment can analyze each of the sentences in combination with the relationship between the sentences, thereby determining a target content that more closely matches the search information.

The specific principles and implementation manners of an apparatus for determining a target content provided in this embodiment are similar with the embodiment shown in FIG. 2, which will not be repeated here.

FIG. 5 is a structural diagram of an apparatus for determining a target content according to another exemplary embodiment of the present application.

As shown in FIG. 5, in the apparatus for determining a target content provided in this embodiment, on the basis of the foregoing embodiment, the splitting module 41 includes: a first relationship determining unit 411, configured to:

obtain an entity included in a sentence; and
determine a first relationship between the sentences according to a corresponding degree of overlap of entities between the sentences.

The splitting module 41 includes: a second relationship determining unit 412, configured to:
determine position labels of the sentences in the article paragraph, and determine a second relationship between the sentences according to the position labels.

The splitting module 41 includes: a third relationship determining unit 413, configured to:
determine a sentence vector corresponding to each of the sentences, and determine a third relationship between the sentences according to the sentence vector.

The splitting module 41 includes: a fourth relationship determining unit 414, configured to:
determine an influence weight between the sentences according to a preset rule, and determine an attention of other sentences to a sentence according to the influence weight corresponding to the sentence.

The representation determining module 42, includes:

a graph determining unit 421, configured to determine a relationship graph corresponding to the relationship according to the relationship between the sentences; and
a representation determining unit 422, configured to determine a sentence representation of each of the sentences in the relationship graph through a preset neural network.

If the number of determined relationship graphs is greater than 1;

the representation determining module 42 further includes a splicing unit 423, configured to:
splice the sentence representations corresponding to the sentences to obtain a complete representation corresponding to the sentences after the representation determining unit 422 determines the sentence representation of each of the sentences in the relationship graph through the preset neural network.

The target determining module 43 is specifically configured to:

determine a matching degree according to the sentence representations and the search information; and
determine a preset number of sentences with highest matching degree as the target sentences.

According to an embodiment of the present application, the present application also provides an electronic device and a readable storage medium.

According to an embodiment of the present application, the present application also provides a computer program product including a computer program, the computer program is stored in a readable storage medium, at least one processor of an electronic device can read the computer program from the readable storage medium, and the at least one processor executes the computer program to enable the electronic device to execute the scheme provided by any one of the above embodiments.

As shown in FIG. 6, it is a block diagram of an electronic device for a method for determining a target content according to an embodiment of the present application. The electronic device is intended to represent various forms of digital computers, such as a laptop computer, a desktop computer, a workbench, a personal digital assistant, a server, a blade server, a mainframe computer, and other suitable computers. The electronic device can also represent various forms of mobile apparatus, such as a personal digital assistant, a cellular phone, a smart phone, a wearable device, and other similar computing apparatus. The components, their connections and relationships, and their functions herein are merely examples, and are not intended to limit an implementation of the application described and/or claimed herein.

As shown in FIG. 6, the electronic device includes: one or more processors 601, a memory 602, and interfaces for connecting various components, including high-speed interfaces and low-speed interfaces. The components are connected to each other with different buses and can be installed on a common main board or in other ways as needed. The processor may process instructions executed within the electronic device, including instructions stored in or on the memory to display graphical information of graphical user interface (GUI) on an external input/output apparatus (such as a display device coupled to the interface). In other embodiments, if required, multiple processors and/or buses can be used with multiple memories. Similarly, multiple electronic devices can be connected, and each device provides some necessary operations (for example, as a server array, a group of blade servers, or a multi-processor system). In FIG. 6, one processor 601 is taken as an example.

The memory 602 is a non-transitory computer readable storage medium according to the present application. The memory is stored with instructions executable by at least one processor, so that the at least one processor executes the method for determining a target content according to the present application. The non-transitory computer readable storage medium of the present application is stored with computer instructions, the computer instructions are configured to enable a computer to execute the method for determining a target content according to the present application.

The memory 602 acting as a non-transitory computer-readable storage medium can be used to store a non-transitory software program, a non-transitory computer executable program and module, such as program instructions/a module corresponding to the method for determining a target content in the embodiments of the present application (for example, the splitting module 41, the representation determining module 42, and the target determining module 43 shown in FIG. 4). The processor 601 executes various functional applications and data processing of the server by running the non-transitory software program, the instructions, and the module stored in the memory 602, that is, implementing the method for determining a target content in the foregoing method embodiments.

The memory 602 may include a program storage area and a data storage area, where the program storage area may be stored with an application program required by an operating system and at least one function; the data storage area may be stored with data created according to the use of the electronic device for determining a target content, and so on. In addition, the memory 602 may include a high-speed random access memory or a non-transitory memory, such as at least one magnetic disk storage device, a flash memory device, or other non-transitory solid-state storage devices. In some embodiments, the memory 602 optionally includes memories remotely provided with respect to the processor 601, and these remote memories may be connected to the electronic device for determining a target content through a network. Examples of the above network include, but are not limited to, Internet, an intranet, a local area network, a mobile communication network, and a combination of them.

The electronic device of the method for determining a target content may further include: an input apparatus 603 and an output apparatus 604. The processor 601, the memory 602, the input apparatus 603, and the output apparatus 604 may be connected through a bus or in other ways. In FIG. 6, connection through a bus is used as an example.

The input apparatus 603 can receive input digital or character information, and generate a key signal input related to user settings and function control of the electronic device of the method for determining a target content, such as a touch screen, a keypad, a mouse, a track pad, a touch panel, an indicator stick, one or more mouse buttons, a trackball, a joystick and other input apparatus. The output apparatus 604 may include a display device, an auxiliary lighting apparatus (such as an LED), a tactile feedback apparatus (such as a vibration motor), and so on. The display device may include, but is not limited to, a liquid crystal display (LCD), a light emitting diode (LED) display, and a plasma display. In some embodiments, the display device may be a touch screen.

Various embodiments of the systems and techniques described herein may be implemented in a digital electronic circuitry, an integrated circuit system, a special-purpose ASIC (application-specific integrated circuit), computer hardware, firmware, software, and/or a combination of them. These various embodiments may include: implementations in one or more computer programs which may be executed and/or interpreted on a programmable system including at least one programmable processor. The programmable processor may be a special-purpose or general programmable processor, and may receive data and instructions from a storage system, at least one input apparatus, and at least one output apparatus, and transmit the data and instructions to the storage system, the at least one input apparatus, and the at least one output apparatus.

These computer programs (also known as programs, software, software applications, or codes) include machine instructions of the programmable processor, moreover, these computer programs may be implemented with a high-level process and/or an object-oriented programming language, and/or an assembly/machine language. As used herein, the terms "machine-readable medium" and "computer-readable medium" refer to any computer program product, device, and/or apparatus (for example, a magnetic disk, an optical disk, a memory, a programmable logic device (PLD)) used to provide machine instructions and/or data to the programmable processor, including the machine-readable medium that receives machine instructions as a machine-readable signal. The term "machine-readable signal" refers to any signal used to provide the machine instructions and/or data to the programmable processor.

In order to provide interaction with users, the systems and techniques described herein may be implemented on a computer, where the computer has: a display apparatus (for example, a CRT (cathode ray tube) or an LCD (liquid crystal display) monitor) for displaying information to users; and a keyboard and a pointing apparatus (for example, a mouse or a trackball) though which users may provide input to the computer. Other types of apparatus may also be used to: provide interaction with users; for example, the feedback provided to users may be any form of sensing feedback (for example, visual feedback, audible feedback, or tactile feedback); and the input from users may be received in any form (including sound input, voice input, or tactile input).

The systems and techniques described herein may be implemented in a computing system that includes a back end component (for example, a data server), or a computing system that includes a middleware component (for example, an application server), or a computing system that includes a front end component (for example, a user computer with a graphical user interface or a web browser, through which the user can interact with the implementations of the systems and techniques described herein), or a computing system that includes any combination of such back end component, middleware component, or front end component. System components may be connected to each other by any form or medium of digital data communication (for example, a communication network). Examples of the communication network include: a local area network (LAN), a wide area network (WAN), and Internet.

A computing system may include a client and a server. The client and the server are generally far from each other and usually perform interactions through a communication network. A relationship between the client and the server is generated by a computer program running on a corresponding computer and having a client-server relationship.

It should be understood that various forms of processes shown above can be used, and steps may be reordered, added, or deleted. For example, the steps described in the present application may be performed in parallel or sequentially or in different orders. As long as desired results of the technical solutions disclosed in the present application can be achieved, no limitation is made herein.

The above specific embodiments do not constitute a limitation to the protection scope of the present application. Persons skilled in the art should know that various modifications, combinations, sub-combinations and substitutions can be made according to design requirements and other factors. Any modification, equivalent replacement and improvement made within the spirit and principle of the present application shall be included in the protection scope of the present application.

**Claims**

1. A method for determining a target content, comprising:

   splitting (201) an article paragraph determined according to search information into multiple sentences, and determining a relationship between the sentences according to attributes of the sentences;
   determining (202) a sentence representation corresponding to each of the sentences according to the relationship between the sentences; and

determining (203) a target sentence according to the sentence representations of the sentences and the search information, and determining a target content according to the target sentence.

2. The method according to claim 1, wherein the determining (201) a relationship between the sentences according to attributes of the sentences comprises:

   obtaining (302) an entity comprised in a sentence; and
   determining (302) a first relationship between the sentences according to a corresponding degree of overlap of entities between the sentences.

3. The method according to claim 1, wherein the determining (201) a relationship between the sentences according to attributes of the sentences comprises:
   determining (303) position labels of the sentences in the article paragraph, and determining a second relationship between the sentences according to the position labels.

4. The method according to claim 1, wherein the determining (201) a relationship between the sentences according to attributes of the sentences comprises:
   determining (304) a sentence vector corresponding to each of the sentences, and determining a third relationship between the sentences according to the sentence vector.

5. The method according to claim 1, wherein the determining (201) a relationship between the sentences according to attributes of the sentences comprises:
   determining (305) an influence weight between the sentences according to a preset rule, and determining an attention of other sentences to a sentence according to the influence weight corresponding to the sentence.

6. The method according to any one of claims 1 to 5, wherein the determining (202) a sentence representation corresponding to each of the sentences according to the relationship between the sentences comprises:

   determining (306) a relationship graph corresponding to the relationship according to the relationship between the sentences; and
   determining (307) a sentence representation of each of the sentences in the relationship graph through a preset neural network.

7. The method according to claim 6, wherein if the number of the relationship graph is greater than 1;
   wherein after the determining (307) a sentence representation of each of the sentences in the relationship graph through a preset neural network, the method further comprises:
   splicing (308) the sentence representations corresponding to the sentences to obtain a complete representation corresponding to the sentences.

8. The method according to claim 1, wherein the determining (203) a target sentence according to the sentence representations of the sentences and the search information comprises:

   determining (309) a matching degree according to the sentence representations and the search information; and
   determining (310) a preset number of sentence with highest matching degree as the target sentence.

9. An electronic device, comprising:

   at least one processor (601); and
   a memory (602) communicatively connected to the at least one processor (601);
   wherein the memory (602) is stored with instructions executable by the at least one processor (601), and the instructions are executed by the at least one processor (601) to enable the at least one processor (601) to execute the method according to any one of claims 1 to 8.

10. A non-transitory computer readable storage medium stored with computer instructions, wherein the computer instructions are configured to enable a computer to execute the method according to any one of claims 1 to 8.

11. A computer program product, comprising:
    a computer program, wherein the computer program is executed by a processer to implement the method according to any one of claims 1 to 8.

FIG. 1A

FIG. 1B

Splitting an article paragraph determined according to search information into multiple sentences, and determining a relationship between the sentences according to attributes of the sentences — 201

Determining a sentence representation corresponding to each of the sentences according to the relationship between the sentences — 202

Determining a target sentence according to the sentence representations of the sentences and the search information, and determining a target content according to the target sentence — 203

FIG. 2

Splitting an article paragraph determined according to search information into multiple sentences ~ 301

Obtaining an entity included in a sentence; and determining a first relationship between the sentences according to a corresponding degree of overlap of entities between the sentences ~ 302

Determining a sentence vector corresponding to each of the sentences, and determining a third relationship between the sentences according to the sentence vector ~ 304

Determining position labels of the sentences in the article paragraph, and determining a second relationship between the sentences according to the position labels ~ 303

Determining an influence weight between the sentences according to a preset rule, and determining an attention of other sentences to a sentence according to the influence weight corresponding to the sentence ~ 305

Determining a relationship graph corresponding to the relationship according to the relationship between the sentences ~ 306

Determining a sentence representation of each of the sentences in the relationship graph through a preset neural network ~ 307

Splicing the sentence representations corresponding to the sentences to obtain a complete representation corresponding to the sentences ~ 308

Determining a matching degree according to the sentence representations and the search information; and determining a preset number of sentence with highest matching degree as the target sentences ~ 309

Determining a target content according to the target sentence ~ 310

FIG. 3

Apparatus for determining target content

| 41 | 42 | 43 |
|---|---|---|
| Splitting module | Representation determining module | Target determining module |

FIG. 4

Apparatus for determining target content

**41**
Splitting module

| First relationship determining unit | 411 |
|---|---|
| Second relationship determining unit | 412 |
| Third relationship determining unit | 413 |
| Fourth relationship determining unit | 414 |

**42**
Representation determining module

| Graph determining unit | 421 |
|---|---|
| Representation determining unit | 422 |

**43**
Target determining module

FIG. 5

Processor 602

Input apparatus 603

Bus

Output apparatus 604

Memory 601

FIG. 6

Europäisches
Patentamt

European
Patent Office

Office européen
des brevets

# EUROPEAN SEARCH REPORT

Application Number

EP 21 15 0908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/129942 A1 (SEUSS C DAVID [US]) 2 May 2019 (2019-05-02) * paragraph [0007] - paragraph [0008] * * paragraph [0054] * * figure 3 * | 1-11 | INV. G06F16/34 |

-----

TECHNICAL FIELDS
SEARCHED      (IPC)

G06F

The present search report has been drawn up for all claims

| Place of search | Date of completion of the search | Examiner |
|---|---|---|
| The Hague | 31 March 2021 | Rameseder, Jonathan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 0908

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2021

| Patent document cited in search report | Publication date | Patent family member(s) | Publication date |
|---|---|---|---|
| US 2019129942 A1 | 02-05-2019 | NONE | |

For more details about this annex : see Official Journal of the European Patent Office, No. 12/82